# EUROPÄISCHE PATENTSCHRIFT

(11) **EP 0 657 265 B1**
(45) Veröffentlichungstag und Bekanntmachung des Hinweises auf die Patenterteilung: **21.05.1997**
(21) Anmeldenummer: 94116739.7
(22) Anmeldetag: 24.10.1994
(51) Int. Cl.: B29C 43/18, B29C 70/78, B29C 45/00

(54) **Verfahren zur Herstellung flächiger kaschierter Teile unter Verwendung von Gitterförmigen Vorformlingen**
Method for manufacturing flat coated articles using grid-structure preforms
Procédé de fabrication d'éléments plats revêtus utilisant des préformes en forme de grille

(30) Priorität: 04.11.1993 DE 4337697
(43) Veröffentlichungstag der Anmeldung: 14.06.1995
(73) Patentinhaber: LIGNOTOCK GmbH, D-36205 Sontra (DE)
(72) Erfinder: Nicolay, Albert, Dr., D-37276 Meinhard-Neuerode (DE)
(74) Vertreter: Pfenning, Meinig & Partner

(56) Entgegenhaltungen:
- EP-A- 0 466 180
- EP-A- 0 543 085
- DE-C- 833 118

## Beschreibung

Die Erfindung betrifft ein Verfahren zur Herstellung von kaschierten Formteilen gemäß Oberbegriff des Anspruches 1. Ein derartiges Verfahren ist aus der EP-A-543 085 bekannt.

Derartige Teile werden beispielsweise vorteilhaft als Innenverkleidungsteile von Kraftfahrzeugen eingesetzt, finden aber auch im Möbelbau und bei anderen Industrieprodukten vielseitige Anwendung.

Der nachfolgend verwendete Begriff des Hinterprägens bezieht sich auf das Kaschieren von beliebigen Trägerteilen mit Folien, Geweben oder Vliesen, bei dem im Verfahrensablauf zunächst ein Vorformling bzw. durch Spritzgießen oder Extrudieren aus thermoplastischem Werkstoff gefertigt wird, der in seinem Volumen dem Volumen des späterhin fertigen Trägerteiles entspricht, dessen Flächenabmessungen zunächst jedoch kleiner als die Fläche des fertigen Trägerteiles ist. In einem gesonderten Verfahrensschritt wird hierbei vorzugsweise die obere Werkzeughälfte, mit der der Vorformling gefertigt wird, aus dem Hubweg zur Herstellung des Vorformlings entfernt und das Trägerteil zusammen mit einer Kaschierfolie mittels einer zweiten oberen Werkzeughälfte unter Beibehaltung der Verwendung der übrigen Preßwerkzeuge fertig geprägt.

Das mit Materialfließvorgängen des Vorformlings verbundene Fertigprägen erfordert weniger Flächenpressung und geringere Temperaturen als ein unmittelbares und vollständiges Hinterspritzen der Kaschierung in einem geschlossenen Spritzgießwerkzeug. Es hat weiter den Vorteil einer schonenderen Behandlung des gegebenenfalls druck- und temperaturempfindlichen Kaschierwerkstoffes. Des weiteren gestattet dieses Hinterprägen die Herstellung von großflächigen Teilen, was beim vorgenannten Hinterspritzen schwierig oder gar unmöglich ist.

Beim Hinterprägen traten bisher noch Schwierigkeiten auf, die es zu überwinden gilt, insbesondere wegen der langen Fließwege beim Fertigprägen der Vorformlinge und der damit verbundenen erheblichen Prägekräfte sowie der Neigung unbefriedigender Randbereiche, die oft nur mangelhaft ausgeformt werden.

Aus langen Fließwegen resultierende erhöhte Schubkräfte zwischen Trägermaterialteil und Kaschierung lassen unerwünschte Faltenbildungen nicht mit Sicherheit ausschließen. Auch besteht die Gefahr der Ausbildung von sogenannten Fließschneiden mit daraus resultierenden mechanischen Schwachstellen im Trägerteil selbst. Probleme ergaben bisher auch die Schwierigkeiten, die zwischen Vorformling und Kaschierung befindliche Luft während des Prägevorganges zu entfernen, was zu örtlichen Blasenbildungen zwischen der Kaschierung und dem Trägerteil geführt hat. Unterschiedliche Temperaturausbildungen und damit nicht immer definierte Haftungsverhältnisse zwischen Bereichen der Vorformlingsfläche und den Fließbereichen beim Prägen schufen in der Vergangenheit zusätzliche Probleme.

Die erheblichen Vorteile, die das Hinterprägen für den hier interessierenden Anwendungszweck bringen, stehen den genannten Schwierigkeiten gegenüber und überwiegen zweifelsohne. Dazu gehört insbesondere die Möglichkeit, materialeinheitlich kaschierte Formteile vorgeben zu können und damit definierte Recyclingbedingungen zu schaffen, wie sie sonst bei Verbundwerkstoffen kaum möglich sind. Der Fortfall lösungsmittelhaltiger Kaschierungskleber gestattet eine besondere umweltschonende und kostengünstige Fertigung. Das Kaschierung und Ausformen unter Benutzung von weitgehend ein und demselben Werkzeug vereinfacht die Fertigung erheblich und trägt somit weiter zur Kostensenkung bei.

Der vorliegenden Erfindung liegt die Aufgabe zugrunde, das Hinterprägen bei der Herstellung kaschierter Formteile so weit zu verbessern, daß bei herabgesetzten Prägekräften die flächeneinheitliche Haftung der Kaschierung auf dem Trägerteil verbessert wird, wofür insbesondere die Gefahr der Luftblasenbildung eliminiert werden muß, und es soll zusätzlich eine beim bisherigen Stand der Technik noch nicht durchführbare Teilkaschierung ermöglicht werden.

Diese Aufgabe wird für den erfindungsgemäßen Verfahrensablauf durch die im kennzeichnenden Teil des Anspruches 1 genannten Merkmale erreicht. Die Unteransprüche 2 bis 9 geben vorteilhafte Weiterbildungen dieses Verfahrensablaufes an.

Auch besteht die Lösung der Aufgabe in der Schaffung von nach den vorgenannten Verfahren hergestellten Formteilen.

Dadurch, daß zum Hinterprägen Vorformlinge verwendet werden, die bei Volumengleichheit mit dem späteren Trägerteil mit diesem umrißgleich sind und zumindest in Teilbereichen gitterförmige Struktur aufweisen, ergibt sich zunächst der Vorteil, daß beim eigentlichen Hinterprägen die Gittermaschen die Fließwege für das Fließmaterial definiert vorgeben können. Das Vorformlingsmaterial ist durch die im Gitter gegebene Materialverteilung ganzflächig über alle Trägerteilflächen verteilt. Eine Vielzahl von Gittermaschen gibt eine entsprechende Vielzahl von Fließbereichen bzw. wegen begrenzter Größe vor, die ungleichmäßig oder gleichmäßig über die Trägerteilfläche verteilt sein können.

Darüber hinaus ergeben sich die weiteren Vorteile, die bei Anwendung des erfindungsgemäßen Verfahrens nur beispielsweise noch zu nennen sind:

Das exakte Ausprägen der Trägerteile, insbesondere in den bisher kritischen Randbereichen, bereitet keine Schwierigkeiten mehr, da das dort benötigte Material schon im Vorformling definiert verteilt vorhanden ist. Die erforderlichen Haftungsbedingungen zwischen der Kaschierung und dem Trägerteil werden über die gesamte Oberfläche homogenisiert und verbessert. Beim Prägeschließen der Gittermaschen gelangt genau die gewünschte Menge an Werkstoff aus der Vorformlingstruktur an die Verbindungsfläche zwischen Trägerteil und Kaschierung. Während des Hinterprägens ist das Fließmaterial ausreichend erwärmt, insbesondere wärmer als das Oberflächenmaterial, und haftet so besonders gut an der Kaschierung. So entstehen flächig verteilte hochfeste Haftungszonen, die die Qualität und die Haftkraft erheblich verbessern. Lufteinschlüsse, die zur Blasenbildung der Kaschierung führen, werden mit Sicherheit vermieden. Die Luft sammelt sich während des Hinterprägens in den Gittermaschen an definierten Stellen, und sie kann von hier durch Entlüftungsbohrungen durch das Prägewerkzeug problemlos abgeführt werden. Eine verbesserte Entlüftung durch Absaugen in kritischen Maschenbereichen ist problemlos möglich.

Wenn Vorformlinge eingesetzt werden, die bei Volumengleichheit mit dem Trägerteil örtlich unterschiedliche Maschenformen und/oder unterschiedliche Dicke aufweisen bzw. verlangen, so ergibt sich eine zusätzliche Möglichkeit, die Haftung der Kaschierung hierdurch gezielt zu beeinflussen. Bereiche, die besonders ablösungsgefährdet sind, können zusätzlich stabilisiert werden. Durch örtliche Dickenvergrößerugng kann weiterer Materialbedarf für integral angeformte Bauelemente, beispielsweise für Retainer od.dgl., berücksichtigt werden. Auch hierbei erleichtert die Vorverteilung des zu prägenden Werkstoffes über die gesamte Trägerteilfläche zufolge der genannten Gitterstruktur und dem damit verbundenen Wegfall langer Fließwege die Fertigung bei erheblich verbesserter Qualität. Die gitterförmige Struktur oder wenigstens Teilstruktur der Vorformlinge ermöglicht es des weiteren, dem Vorformling ganzflächig oder in Teilbereichen draht-, faser- oder bandförmige Verstärkungseinlagen einzugeben. Die Splitterbildung bei Verkehrsunfällen für den Fall, daß die kaschierten Formteile als Pkw-Innenverkleidungen Anwendung finden, kann so unterbunden, zumindest jedoch weitgehend verringert werden. Auch das Verformungsvermögen der Formteile beim Aufprall des Fahrzeuges bis zum Bruch, also die Aufpralldeformation und Kraftaufnahme, ist hierdurch positiv beeinflußbar.

Die durch die Gittervorgabe erheblich verringerte Prägekraft, die zum Endausformen aufgewendet werden muß, und die daraus resultierende Entlastung für die Dekorkaschierung erlauben es, das Vorformen der Kaschierung zeitgleich mit der Vorformfertigung unmittelbar im Kaschierwerkzeug durchzuführen und so einen Teil der zum Vorformen der Kaschierung benötigten Wärme für die gewünschte Haftverbesserung zwischen Kaschierung und Trägerteil auszunutzen. Beim vorliegenden erfindungsgemäßen Verfahren treten bei ganzflächiger Vorverteilung des Trägermaterials nur die gewünschten örtlich definierten und begrenzten Fließvorgänge auf. Hierdurch wird es möglich, das Hinterprägen mehrstufig durchzuführen und Teilkaschierungen in guter Qualität zu realisieren.

So kann beispielsweise zunächst ein Stoffinsert, also ein Stoffdekor inmitten einer Kaschierung aus Thermoplastmaterial od.dgl. ausgeprägt werden. Hierfür und gleichzeitig kann eine Umrandung in eine mitgeprägte Schattenfuge eingebettet werden. Nachfolgend kann im Verfahrensablauf das gesamte Teil, also auch das schon aufgeprägte Stoffinsert mit einer Kaschierfolie überspannt und der Rest des Trägerteils fertig hinterprägt und mit der Folie verbunden werden. Die damit in die Schattenfuge mit eingedrückten Randbereiche ergeben einen optisch sauberen und einwandfreien Übergang. An der nicht vom Stoffinsert bedeckten Flanke haftet die Kaschierfolie, während sie den Stoffbereich ohne Haftung umspannt. Nach dem Trennen der Folienkaschierung in der Schattenfuge kann der Stoffinsertbereich von dem ihn überspannenden Folienabschnitt befreit werden. Stoffinsert und Folie stoßen in der Schattenfuge optisch einwandfrei aufeinander, ohne daß zusätzliche Maßnahmen wie beispielsweise die bisher erforderlichen Ziernahtschweißungen oder Leisten für diesen Übergangsbereich notwendig wären.

Der Verfahrensschritt der Herstellung der Vorformlinge selbst ist beliebig. Hierfür können sowohl Spritzgießverfahren als auch das Extrudieren geeignet fließfähiger Materialien Anwendung finden oder schließlich auch die Warmumformung aus vorgegebenen ebenen plattenförmigen Vormaterialien. Die für das erfindungsgemäße Verfahren erforderliche gitterförmige Struktur der Vorformlinge läßt sich beispielsweise vorteilhaft durch geeignetes Lochen des Vormaterials im letztgenannten Falle erzeugen.

Die Erfindung soll nachfolgend anhand der Figuren 1 bis 13 näher erläutert werden, die den Verfahrensablauf zur Herstellung der erfindungsgemäßen Formteile schematisiert und beispielsweise wiedergeben. Hierbei bedeuten:
- Fig. 1 bis 3: drei Verfahrensschrittstellungen des Hinterprägevorganges nach dem Stand der Technik,
- Fig. 4 bis 6: entsprechen den Verfahrensschritten gemäß Fig. 1 bis 3, jedoch für das erfindungsgemäße Verfahren;
- Fig. 7: zeigt eine vergrößerte Darstellung des Bereiches A aus Fig. 3;
- Fig. 8: Zeigt eine vergrößerte Darstellung des Bereiches B aus Fig. 6;
- Fi. 9 bis 13: unterschiedliche Verfahrensschritte beim Hinterprägen mit zusätzlichem Stoffinsert.

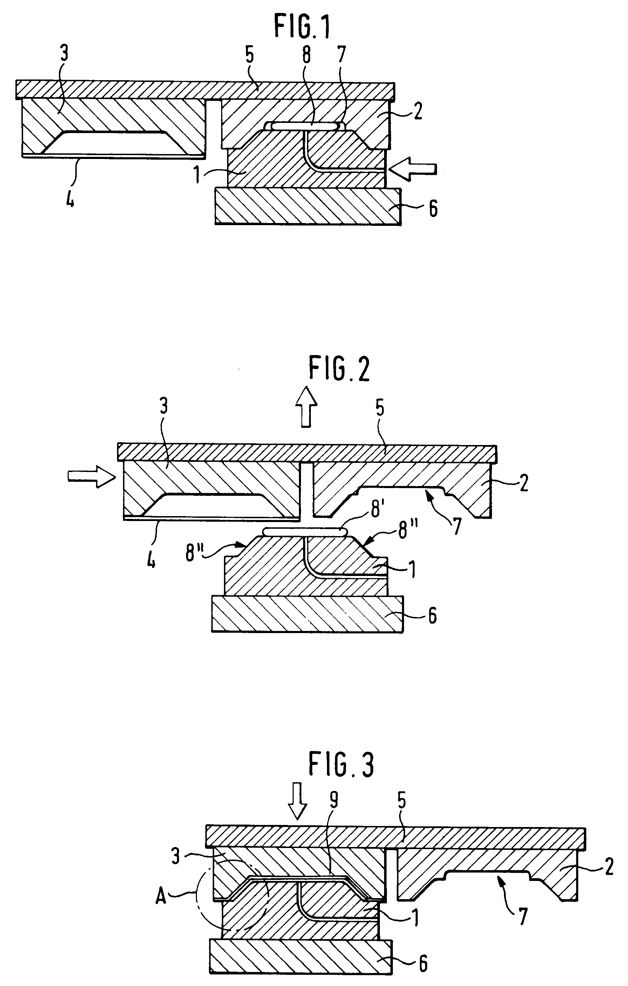

In Fig. 1 ist mit 1 das Unterwerkzeug benannt, dem das Oberwerkzeug 2 für die Vorformlingsfertigung zugeordnet ist. Der Werkstoff 8 für den Vorformling 8' wird in Pfeilrichtung in die Kontur 7 injiziert (Spritzeinrichtung nicht mit dargestellt), die den Vorformling 8' definiert. Das zum Kaschieren benötigte Oberwerkzeug 3 ist mit dem Oberwerkzeug 2 zusammen auf der Trägerplatte 5 befestigt. Der durch die Bauelemente 2, 3 und 5 gebildete komplette Oberwerkzeugsatz ist horizontal durch eine geeignete, in den Fig. nicht mit dargestellte, Transfereinrichtung, vertikal durch die ebenfalls nicht dargestellte Prägepresse, in der Werkzeugsatz eingespannt ist, beweglich. Die Bewegungsrichtungen sind in den Fig. 1 - 3 durch Pfeile verdeutlicht.

Fig. 2 zeigt ein Zwischenstadium nach der Fertigung des Vorformlings 8':
Der obere Werkzeugsatz (Bauelemente 2, 3 und 5) ist in Pfeilrichtung angehoben, das Kaschieroberwerkzeug 3, daß die Kaschierung 4 unverformt enthält, wird in Richtung des vertikalen Pfeiles über das den Vorformling 8' enthaltende Unterwerkzeug 1 bewegt, das mit Hilfe der Grundplatte 6 in der Kaschierpresse befestigt ist. Es ist deutlich zu erkennen, daß der Vorformling 8' kleiner ist, als das spätere Teil 9 die abfallenden Flanken 8'' in voller Länge durch Fließvorgäng neu gebildet werden.

Fig. 3 erläutert den letzten Verfahrensschritt, bei dem das Kaschier-Oberwerkzeug 3 in Pfeilrichtung abgesenkt wird, wobei die Kaschierung 4 ausgeformt und der Vorformling 8' druckbeaufschlagt wird. Dessen großflächiges Fließen führt dann zum fertig hinterprägten kaschierten Formteil 9, das danach dem aus den Bauteilen 1 und 3 gebildeten Hinterpräge- und Kaschierwerkzeug entnommen werden kann.

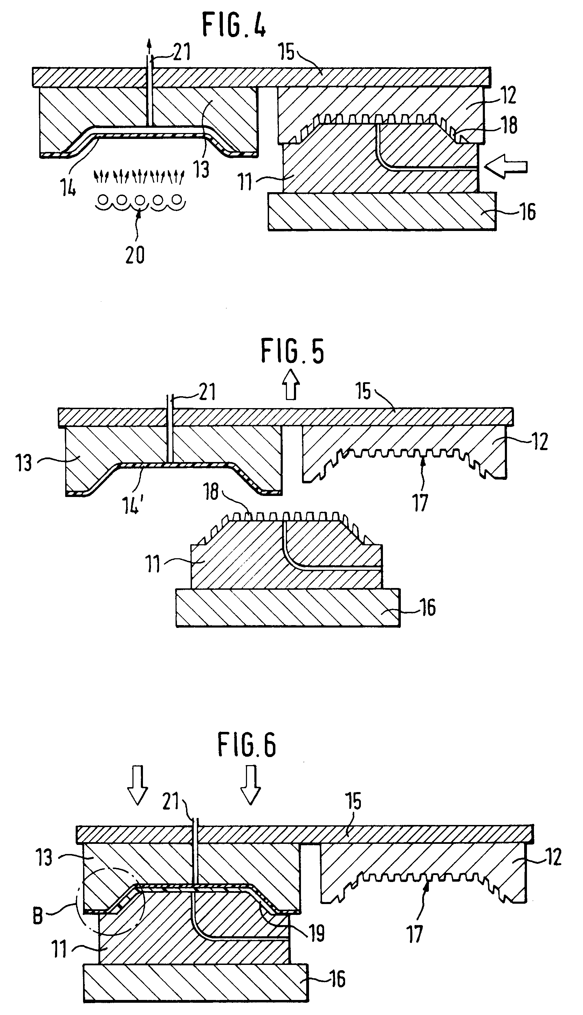

In Fig. 4 ist das gemeinsame Unterwerkzeug mit 11, das Oberwerkzeug für die Spritzgießfertigung des Vorformlings mit 12 und das Kaschieroberwerkzeug mit 13 bezeichnet. Das Oberwerkzeug 12 enthält die gitterförmig ausgeführte Kavität 17 für die Fertigung des Vorformlings 18, der hier die ganze Fläche des späteren Formteiles überdeckt. Das Kaschieroberverkzeug 13 besitzt die Vakuumbohrung 21, mit deren Hilfe die Kaschierfolie 14 nach ihrer Erwärmung mit Hilfe des Infrarotstrahlers 20 in der dargestellten Weise vorgeformt wird, und zwar in der Zeit, in der der Vorformling 18 durch Injektion des Thermoplastwerkstoffes in Pfeilrichtung gefertigt wird.

Der weitere in den Fig. 5 und 6 dargestellte Verfahrensablauf entspricht denen der Fig. 2 und 3 bis auf die eigentlichen Fließvorgänge des Vorformlings beim Hinterprägen, die zum fertigen Teil 19 führen,

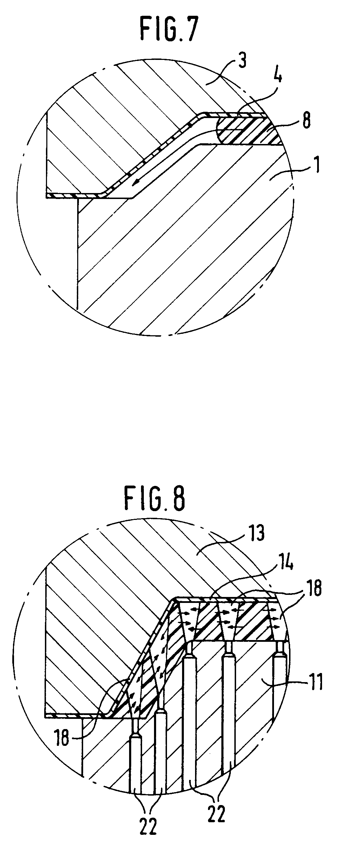

Fig. 7 erläutert das Fließen beim konventionellen Hinterprägen anhand der Auschnittsvergrößerung des Bereiches A in Fig. 3. Die langen Fließwege des Vorformlingwerkstoffes 8' bis zum fertigen Teil sind durch Pfeile verdeutlicht. Für die Kaschierung 4 bedeutet das erhöhte Schubbelastung entlang des Fließweges mit daraus resultierender Neigung zur Faltenbildung.

Anders sind die Verhältnisse beim erfindungsgemäßen Vorgehen, dargestellt in Fig. 8: Das Materialgitter des Vorformlings 18 erstreckt sich bis in den Randbereich des späteren Fertigteiles. Das Fließen beim Hinterprägen erfolgt nur in Richtung der Gittermaschen (kleine Pfeile) und zwar bei Fließwegen nur in der Größenordnung der halben Maschenweite. Die Schubbelastung der Kaschierfolie 14 bleibt gering, die Gefahr einer Faltenbildung wird vermieden. Die beim "Zuprägen" der Gittermaschen des Vorformlings 18 verdrängte Luft kann durch die Entlastungsbohrungen 22 entweichen. Die Maschenform des Vorformlings ist an sich beliebig. Aus Gründen einer vereinfachten Werkzeugfertigung wird ein Kreisquerschnitt der Maschen zu bevorzugen sein. Konizitäten können dabei für Aushebeschrägen sorgen, die das Entformen des Vorformlings begünstigen. Des weiteren können derartige Schrägen dafür sorgen, daß die verdrängte Luft beim "Zuprägen" der Gittermaschen in Richtung der Entlastungsbohrung 22 geleitet wird.

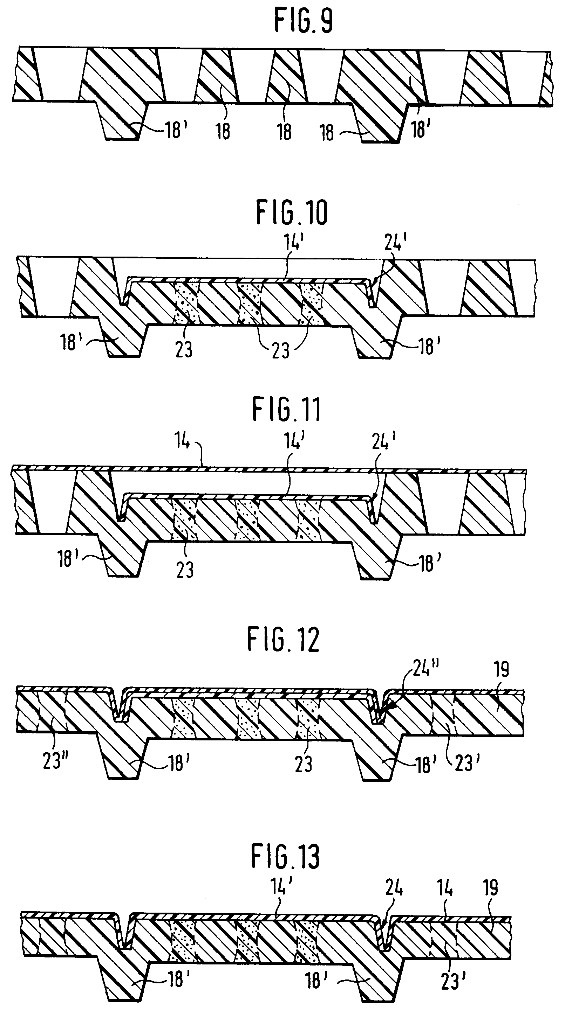

Die Figurenfolge 9 - 13 verdeutlicht die Verfahrensschritte beim erfindungsgemäßen Teilkaschieren durch Hinterprägen. Der ausschnittsweise dargestellte gitterförmige Vorformling 18 besitzt im Bereich der späteren Schattenfuge 24 zwischen den Kaschierungen 14 und 14' die Verdickungen 18', die eine Materialschwächung im Bereich der Schattenfuge 24 kompensieren (Fig. 9).

In einem ersten Prägeschritt wird der Zuschnitt des Stoffinsertes 14' der Teilkaschierung positionsgenau hinterprägt, wobei die Gittermaschen des Vorformlings in den mit 23 bezeichneten Bereichen "zugeprägt" werden, und das spätere Teil 19 hier bereits seine Enddicke erhält.

Außerhalb dieses Bereiches ist ein Prägen noch nicht notwendig. Die Flanke 24' der späteren Schattenfuge 24 wird dabei mit ausgeformt und der Rand des Stoffinsertes 14' wird mit dieser Flanke 24' verbunden (Fig. 10).

Im nächsten Verfahrensschritt wird nunmehr die Kaschierung 14, beispielsweise eine Folie, ganzflächig aufgebracht (Fig. 11) und hinterprägt.

Die Schattenfuge 24 wird dabei fertig geprägt, wobei die Folie 14 mit der noch freien Flanke 24'' dieser Fuge verklebt (Fig. 12), wobei dann die restlichen Gittermaschen 23' und 23'' zugeprägt werden und das Formteil 19 auch hier seine Enddicke erhält.

Abschließend wird die Folie 14 im Grund der fertiggeprägten Schattenfuge 24 umlaufend durchtrennt und der Folienbereich über dem Stoffinsert 14' entfernt (Fig. 13).

Wie die Figurenfolge 9 - 13 zeigt, kann bei Verwendung gitterförmiger Vorformlinge das Hinterprägen stufenweise durchgeführt werden, wodurch die Flexibilität des Verfahrens beträchtig erhöht wird. Bei den Prägewerkzeugen, die in den Fig. 9 - 13 nicht dargestellt wurden, kann auf einen ausgereiften Stand der Technik geteilter Werkzeuge zurückgegriffen werden. Die Kaschierung 14 überspannt bei der dargestellten Vorgehensweise die Bewegungsfuge im Prägewerkzeug, verhindert das Eindringen von Formteilwerkstoff und stellt so eine störungsfreie Werkzeugfunktion sicher.

## Patentansprüche

1. Verfahren zur Herstellung von kaschierten formstabilen Formteilen, wie Innenverkleidungen von Kraftfahrzeugen od.dgl., bei denen ein Trägerteil mit einer Oberflächenkaschierung versehen wird und bei dem zunächst ein mit dem Volumen des Trägerteiles gleicher, aber bezüglich der Endausformung nicht flächengleicher Vorformling gefertigt wird, dieser nachfolgend unter Ausnutzung der ihm innewohnenden Fertigungswärme mittels Druckeinwirkung mit der Kaschierung durch Hinterprägen mit dem thermoplastischen Werkstoff des Trägerteiles verbunden wird, und durch Materialfließvorgänge seine Endform erhält,
dadurch **gekennzeichnet,**
daß die mit dem fertigen Trägerteilvolumen gleichen Vorformlinge mit gleichen Umrißformen wie das fertig kaschierte Formteil und mit zumindest in Teilbereichen gitterförmiger Struktur dem Materialfließvorgang unterworfen werden, so daß die zunächst offenen Gittermaschen des Vorformlings mit der Druckbeaufschlagung für den Hinterprägevorgang durch örtliches Fließen geschlossen werden.

2. Verfahren nach Anspruch 1,
dadurch gekennzeichnet, daß Vorformlinge mit bereichsweise unterschiedlicher Maschenform und/oder unterschiedlicher Dicke dem Materialfließvorgang unterworfen werden.

3. Verfahren nach Anspruch 1,
dadurch gekennzeichnet, daß die Vorformlinge zusammen mit an der Rückseite integral angeformten zusätzlichen Bauelementen, wie beispielsweise Retainern od.dgl., in den Verfahrensablauf eingebracht werden.

4. Verfahren nach mindestens einem der Ansprüche 1 bis 3,
dadurch gekennzeichnet, daß draht-, faser- und/oder bandförmige Verstärkungseinlagen in die Gitterstruktur des Vorformlings eingebettet werden, bevor dieser dem Hinterprägevorgang unterworfen wird.

5. Verfahren nach mindestens einem der Ansprüche 1 bis 4,
gekennzeichnet durch die Verwendung von vorgeformten Kaschierwerkstoffen.

6. Verfahren nach mindestens einem der Ansprüche 1 bis 5,
dadurch gekennzeichnet, daß das Hinterprägen von mindestens zwei Bereichen der Kaschierung, die aus unterschiedlichen Kaschierwerkstoffen besteht, in mindestens zwei unmittelbar aufeinanderfolgenden Verfahrensschritten erfolgt, wobei die Nähte zwischen den Teilkaschierungen in Form von Schattenfugen mit eingeprägt werden.

7. Verfahren nach mindestens einem der Ansprüche 1 bis 6,
dadurch gekennzeichnet, daß das Prägewerkzeug während des Hinterprägens im Bereich der Gittermaschen des Vorformlings entlüftet wird.

8. Verfahren nach mindestens einem der Ansprüche 1 bis 7,
dadurch gekennzeichnet, daß die Vorformlinge unmittelbar vor dem Hinterprägen durch Umformen von thermoplastischen Werkstoffen gefertigt werden.

9. Verfahren nach Anspruch 1,
dadurch gekennzeichnet, daß die Vorformlinge durch Warmumformung aus ebenem plattenförmigen Ausgangsmaterial unmittelbar vor dem Hinterprägen hergestellt werden.

10. Nach dem Verfahren von Anspruch 1 und mindestens einem der Ansprüche 2 bis 9 hergestelltes Formteil, ausgeformt aus einem durch Hinterprägen endverformten Vorformling mit wenigstens teilweiser ursprünglicher Gitterstruktur und mit diesem ausschließlich durch Wärme- und/oder Druckbeaufschlagung flächenfest verbundener Oberflächenkaschierung.

## Claims

1. Process for the production of laminated, dimensionally stable formed parts, such as inner linings for motor vehicles or similar, in which a support part is provided with a surface lamination, and in which firstly a preform is made, which is equal in volume to the support part but is not equal in area thereto with respect to the end shaping, this is then joined by the action of pressure to the lamination by rear punching with the thermoplastic material of the support part by utilising inherent heat from its production, and reaches its final form by means of material flow processes, characterised in that characterised in that the preforms with the same finished support part volume, having the same contour shapes as the finished laminated formed part and having a grid-like structure at least in part areas, are subjected to the material flow process so that the initially open grid meshes of the preform are closed with the application of pressure for the rear punching process by localised flow.

2. Process according to Claim 1, characterised in that preforms with different mesh shapes and/or different thickness in some areas are subjected to the material flow process.

3. Process according to Claim 1, characterised in that the preforms are brought into the course of the process together with additional structural elements integrally formed onto the rear side, e.g. retainer elements or similar.

4. Process according to at least one of Claims 1 to 3, characterised in that reinforcement inserts in the form of wires, fibres and/or strips are embedded into the grid structure of the preform before this is subjected to the rear punching process.

5. Process according to at least one of Claims 1 to 4, characterised by the use of preformed laminating materials.

6. Process according to at least one of Claims 1 to 5, characterised in that the rear punching of at least two areas of the lamination, which is made of different laminating materials, is carried out in at least two process steps directly following one another, whereby the seams between the part laminations are also punched in in the form of shadow joins.

7. Process according to at least one of Claims 1 to 6, characterised in that the punching tool is deaerated in the region of the grid meshes of the preform during the rear punching.

8. Process according to at least one of Claims 1 to 7, characterised in that the preforms are made directly before the rear punching process by deforming thermoplastic materials.

9. Process according to Claim 1, characterised in that the preforms are produced from plane, panel-shaped starting material by hot-deformation directly before the rear punching process.

10. Formed part produced according to the process of Claim 1 and at least one of Claims 2 to 9, formed out of a preform with ends deformed by rear punching and with at least partially original grid structure, and surface lamination joined to this firmly over the surface solely by the application of heat and/or pressure.

## Revendications

1. Procédé de fabrication de pièces de forme indéformables revêtues, telles que des habillages intérieurs d'automobiles ou équivalents, dans lesquelles un élément support est muni d'un revêtement superficiel, procédé dans lequel on fabrique tout d'abord une ébauche de même volume que l'élément support mais qui n'a pas la même superficie que le moulage final, et cette ébauche est ensuite assemblée au revêtement avec utilisation de la chaleur de fabrication qu'elle renferme, et au moyen d'un effet de pression, par formage arrière exécuté avec la matière thermoplastique de l'élément support, et elle reçoit sa forme définitive par des processus d'écoulement de la matière,
caractérisé en ce que les ébauches qui ont le même volume que l'élément support fini et qui présentent la même forme de contour que la pièce de forme revêtue finie, et une structure de grille au moins dans des régions partielles, sont soumises au processus d'écoulement de la matière de telle manière que les mailles de grille de l'ébauche qui sont initialement ouvertes, soient refermées par écoulement local, avec la sollicitation de pression nécessaire pour l'opération de formage arrière.

2. Procédé selon la revendication 1,
caractérisé en ce qu'on soumet à l'opération d'écoulement de la matière des ébauches ayant une forme de maille et/ou une épaisseur qui varient selon les régions.

3. Procédé selon la revendication 1,
caractérisé en ce que les ébauches sont introduites dans le déroulement du procédé conjointement avec des éléments de construction additionnels tels que, par exemple, des organes de retenus ou équivalents, qui sont venus de moulage sur la face arrière.

4. Procédé selon au moins une des revendications 1 à 3,
caractérisé en ce que des charges renforçantes formées de fils, de fibres et/ou de rubans sont noyées dans la structure de grille de l'ébauche avant que celle-ci ne soit soumise à l'opération de surmoulage arrière.

5. Procédé selon au moins une des revendications 1 à 4,
caractérisé par l'utilisation de matières de revêtement préformées.

6. Procédé selon au moins une des revendications 1 à 5,
caractérisé en ce que le surmoulage arrière d'au moins deux régions du revêtement, lequel est composé de matières de revêtement différentes, s'effectue dans au moins deux phases du procédé qui se succèdent directement, les joints d'assemblage entre le revêtement partiel étant moulés sous la forme de joints invisibles.

7. Procédé selon au moins une des revendications 1 à 6,
caractérisé en ce que l'outil de moulage est dégazé dans la région des mailles de la grille de l'ébauche au cours du formage arrière.

8. Procédé selon au moins une des revendications 1 à 7,
caractérisé en ce que les ébauches sont préparées directement avant le surmoulage arrière, par déformation de matière thermoplastique.

9. Procédé selon la revendication 1, caractérisé en ce que les ébauches sont fabriquées immédiatement avant le surmoulage arrière, par déformation à chaud, à partir d'une matière de départ plane en forme de plaque.

10. Pièce de forme fabriquée par le procédé de la revendication 1 et d'au moins une des revendications 2 à 9, formée à partir d'une ébauche qui a été déformée définitivement par formage arrière, et qui possède au moins partiellement une structure initiale de grille, et un revêtement superficiel qui est assemblé à cette ébauche solidairement sur toute sa surface, par application de chaleur et/ou de pression.
